# EUROPEAN PATENT SPECIFICATION

(11) **EP 2 110 020 B1**
(45) Date of publication and mention of the grant of the patent: **09.07.2014**
(21) Application number: 08007605.2
(22) Date of filing: 18.04.2008
(51) Int. Cl.: A21B 1/42, A21B 1/48

(54) **Oven and process to control the air-flow and air-leakages between two chambers**
Ofen und Verfahren zur Steuerung des Luftstroms und von Luftlecks zwischen zwei Kammern
Four et processus de contrôle du débit d'air et des fuites d'air entre deux chambres

(43) Date of publication of application: 21.10.2009
(60) Divisional application: 13186178.3
(73) Proprietor: GEA Food Solutions Bakel B.V., 5761 EN Bakel (NL)
(72) Inventor: Kuenen, Hendrikus Antonius Jacobus, 5825 DA Overloon (NL)
(74) Representative: Wolff, Felix

(56) References cited:
- EP-A- 0 558 151
- EP-A- 1 690 453
- WO-A-2005/027644
- DE-A1- 3 225 813
- DE-A1- 19 729 776
- US-A- 4 834 063
- US-A- 5 243 962
- US-A- 5 673 681
- US-A- 5 683 240
- US-B1- 6 323 462

## Description

The present invention relates to an oven comprising:
- a first chamber and a second chambers, which are separated by separation means
- conveyor means for guiding products from the inlet through these chambers to the outlet,
- temperature control means for controlling the temperature and/or humidity in each chamber individually using a fluid and
- a passage in the separation means through which the conveyor means are directed from the first chamber to the second chamber.

The present invention further relates to a process how to operate this oven.

An oven of this type is for example known from EP 1 221 575 and EP 0 558 151 and is suitable for the complete or partial cooking of edible products, especially protein containing products, like chicken, hamburgers cordon bleu etc.. The above mentioned patent application are herewith included by reference and are therefore part of the disclosure of the present patent application. The temperature and humidity can be set such, that during the residence time in the oven, which is dependent on the length and velocity of the conveyor belt, the desired cooking and, if needed, browning can be effected.

Furthermore, the ovens known from the state of art comprise two chambers, which are separated by a partition wall. The conveyor belt moves from the first chamber to the second chamber via an opening in the partition wall. Each chamber has its own heating means and ventilation means, so that different temperature-, humidity- and/or fluid-flow-conditions can be set in each chamber, respectively. However, the cooking process in the ovens according to the state of the art is often not stable and/or not reproducible.

US 4.834.063 is considered the closest prior art.

It is therefore an objective of the present invention to provide an oven and a process that is stable and leads to reproducible process conditions in the respective chambers.

The problem is solved by an oven comprising:
- a first chamber and a second chambers, which are separated by separation means
- conveyor means for guiding products from the inlet through these chambers to the outlet,
- temperature control means for controlling the temperature in each chamber individually using a fluid and
- a passage in the separation means through which the conveyor means are directed from the first chamber to the second chamber,
- means to avoid a fluid-leakage between the two chambers,
characterized in that the means is a fluid flow, introduced in the passage, whereby the pressure in the vicinity of the passage is higher than the pressure in the first- and/or second chamber.

Due to the fluid-leakage aviodance the process conditions, e.g. temperature, humidity and/or the flow-pattern, in the individual chambers can be controlled very well and thus reproducible conditions can be established. The inventive oven is easily operated. By means of a controlled leakage, process conditions in the individual chambers can be influenced.

The subject matter "Control a fluid leakage" means controlling the magnitude and/or the direction of the leakage from the first- to the second chamber or vice versa.

The oven according to the present invention comprises a first and a second chamber, which are separated by separation means, for example a partition. The inventive oven further comprises conveyor means for guiding products from the inlet through these chambers to the outlet. The conveyor means are preferably an endless conveyor belt. In the separation means, there is a passage through which the conveyor means are directed from the first- to the second chamber. It has now been found out, that due to the different conditions in the chambers, respectively, and/or due to the motion of the conveyor means an uncontrolled leakage of process gas, e.g. air and/or process vapor, between the chambers through the passage occurs, which is unpredictable in its magnitude and its direction. Due to this leakage, the process parameters are influenced unpredictably, sometimes resulting in uncontrollable conditions, which makes the cooking process non-reproducible.

According to the present invention, the oven comprises means to reduce, preferably eliminate and/or control the process-fluid leakage between the two chambers.

This means to eliminate and control the process-fluid leakage between the two chambers is a fluid flow, introduced, preferably injected, in the vicinity of the passage. Preferably, the volume-flow-rate of the fluid flow and/or its pressure are adjustable. The fluid flow can be taken from the ambient.

Due to the introduction of the fluid flow, the pressure in the vicinity of the passage is higher than the pressure in the first- and the second chamber, respectively, so that no leakage of process fluid out of one of chambers to the other chamber occurs.

Preferably, the fluid flow is divided into a first part that flows from the passage towards the first chamber and a second part that flows from the passage towards the second chamber. By increasing the fluid flow, the volume flow towards one or both chambers will also be increased and vice versa. The division of the fluid flow depends, for example, on the pressure level in the first and second chamber, respectively. However, it is also possible to control the ratio how the fluid flow is split. This can be done, for example, with one or more valves.

In a preferred embodiment of the present invention, at least one of the flows towards the chambers is guided in the vicinity of the partition by guiding mean. This guiding means can be for example a tunnel or a tube that extends from the passage towards the first and/or the second chamber. The fluid flow is introduced into this guiding means, preferably in the middle and then separated into the part first part that flows towards the first chamber and a second part that flows towards the second chamber.

Normally, each chamber comprises at least one fan and ducts for a fluid flow, especially the fluid circulation, in the chamber to adjust the temperature and/or humidity in the chamber and/or to improve the heat transfer in the chamber, respectively. From this main fluid flow, the fluid flow to reduce or control the leakage at the passage is preferably separated. Preferably, the oven comprises means to control from which chamber the fluid is taken, the volume-flow-rate and/or the split of the fluid flow between the chambers. This preferred embodiment of the present invention has the advantage, that the cooking process can be executed each time under the same conditions. Furthermore, the oven can be operated such that no, only a minimum or controlled leakage around the passage occurs.

The control means can be adjusted manually or automatically. Preferably, the control means are adjusted automatically, for example by a PLC-controller. The PLC-controller receives information about the process and adjusts, for example, the flow to reduce or control the leakage automatically. Furthermore the PLC-controller can preferably control out of which chamber the fluid is taken and/or how it is divided after it has been injected in the vicinity of the passage. If, for example the circulation speed of the fluid in one chamber is increased to improve, for example, the heat-transfer, the pressure increases in this chamber, which, according to the state of the art results in an increased leakage. According to the present invention, however, the leakage between the chambers can be reduced and/or controlled to a desired level by adjusting the fluid-flow that that reduces or controls this leakage.

According to a new or preferred embodiment of the present invention, the oven comprises controlled ventilation means between the first chamber, the second chamber and/or the ambient. This embodiment allows to adjust process parameters in one chamber by controlled ventilation of the chamber with process fluid out of the other chamber or the ambient. If, for example, the first chamber is operated at a higher temperature and/or humidity than the second chamber, process fluid, e.g. air, can be ventilated from the second to the first chamber, in case the process parameters are too high in the first chamber and vice versa in case that the process parameters are too low in the second chamber. If, for example, the process conditions in the second chamber are above the set point, air can be drawn from the ambient into the second chamber. This controlled ventilation is reduced or stopped as soon as the desired process conditions have be reached. All this can be done via the fans, the passage and/or additional ventilation means. The controlled ventilation is preferably executed by a automatic controller, e.g. a PLC-controller.

The above made disclosure also applies to the embodiments disclosed below.

Another embodiment of the present invention is a process to operate an oven according to the preferred embodiment, characterized in that a fluid flow is injected in the passage at a higher pressure than the pressure in the first- and second chamber, in order to avoid fluid leakage between the first chamber and the second chamber.

The present inventions are now explained in further detail according to the attached figures. These explanations do not limit the scope of protection.
- Figure 1: shows an oven according to the preamble of claim 1.
- Figure 2: shows one embodiment of the inventive oven.
- Figure 3: shows details of the injection of the fluid flow in the vicinity of the passage.
- Figure 4: shows even further details of the injection according to Figure 3.
- Fig. 5-9: do not illustrate embodiments of present invention

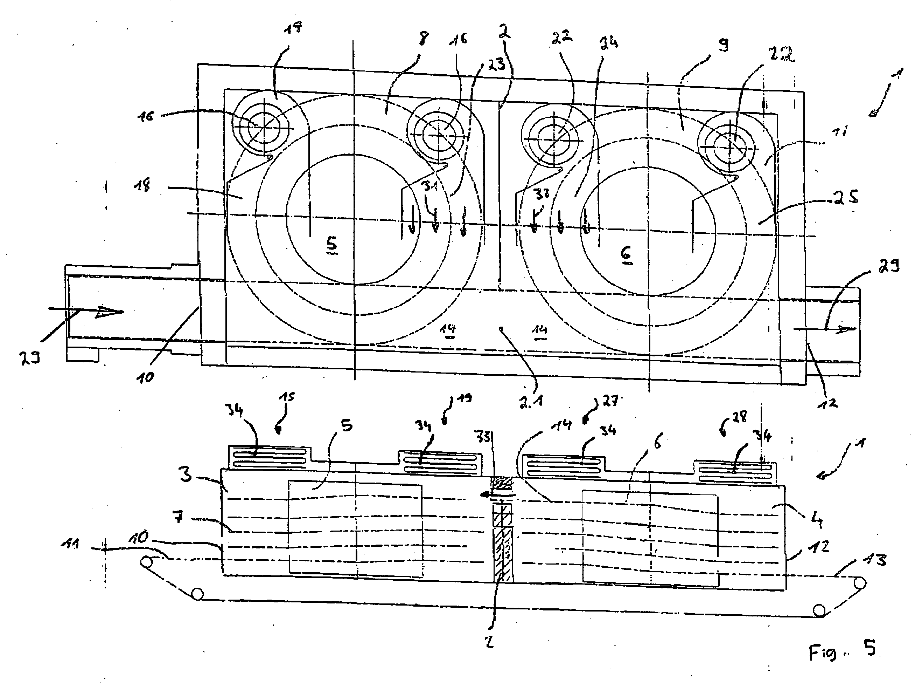

- Figures 5- 7: show an examples of the controlled ventilation.

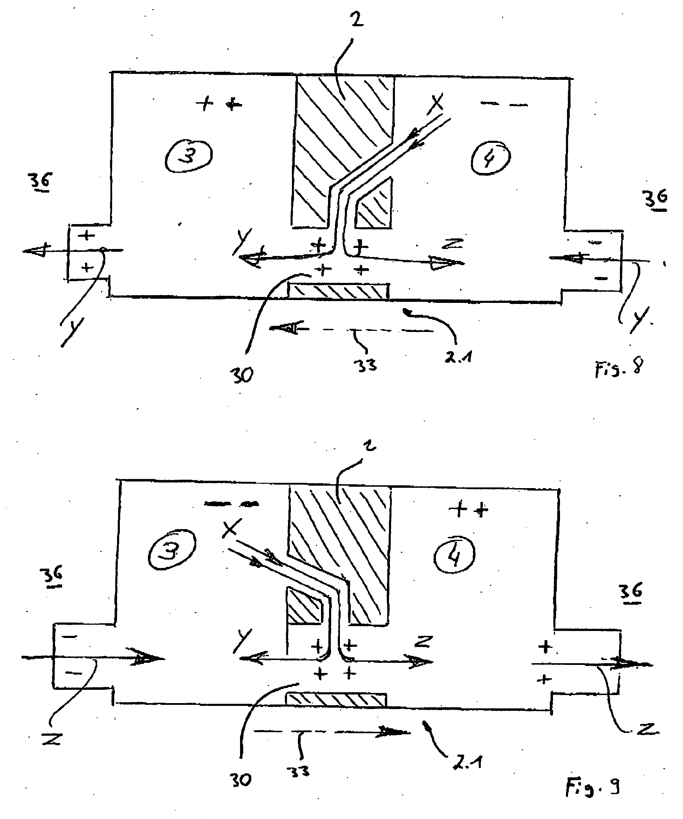

- Figures 8, 9: show another example of controlled ventilation via the passage 30

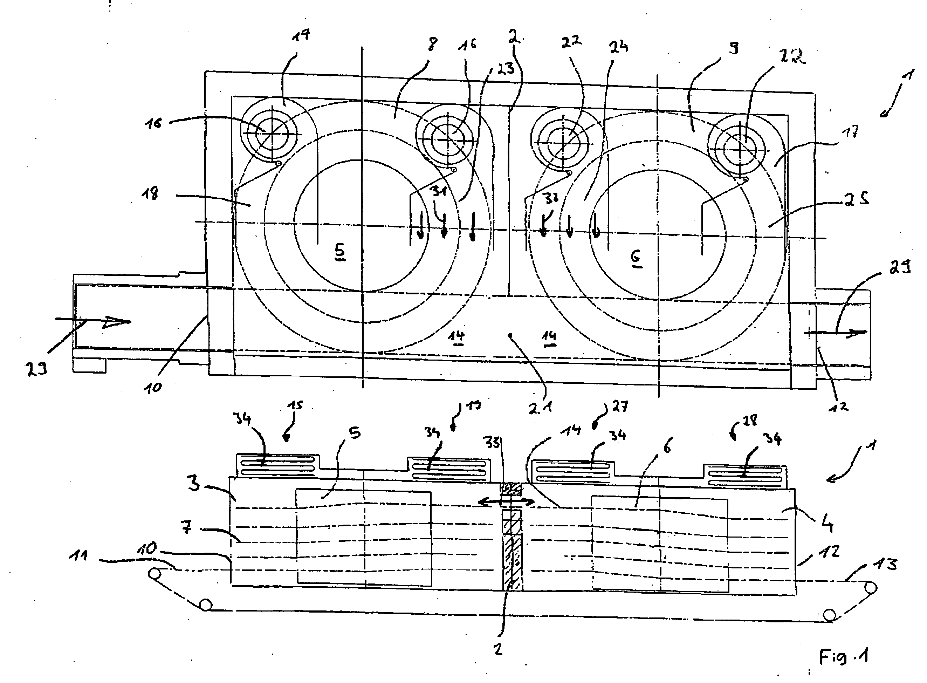

Figure 1 shows an oven according to the state of art. The oven 1 is divided into a first chamber 3 and a second chamber 4. The chambers are divided by means of a partition 2. A rotatable drum 5, 6 is arranged in each of these chambers, around which the conveyor belt 7 is guided along two helical paths 8, 9. The endless conveyor belt enters the oven 1 via the entrance 10 by a straight conveyor belt section 11 and leaves the oven 1 via the exit 12, likewise by means of a straight section 13. The two helical sections 8, 9 are connected by the straight conveyor belt section 14, which lies at the top. The partition means 2 comprise a passage 2.1 for the belt section 14. This passage 2.1 is larger than the conveyor belt 14. It has now been found, that a leakage 33 of the process-fluid e.g. air and steam occurs via this passage. This leakage-flow is unpredictable. Internal and external conditions can influence this leakage-flow in its magnitude and/or direction, so that the process-conditions in the oven are often not reproducible.

The heating means, which are overall denoted by 15, 19, 27, 28, are arranged in the top of the housing. These heating means 15, 19, 27, 28 each comprise a fan 16, 22 with a spiral casing 17, which opens into a duct 18, 23 - 25. The heating elements 34 are situated in the ducts, respectively. The process fluid, e.g. air and steam, is sucked up by the fans out of chambers 3, 4 and is forced into the duct via the spiral casing 17, respectively. The process fluid 31, 32 flows past the heating elements 34 and is then reintroduced into the respective chamber 3, 4. The motion of the products (not depicted) to be cooked in the oven is depicted by arrows 29.

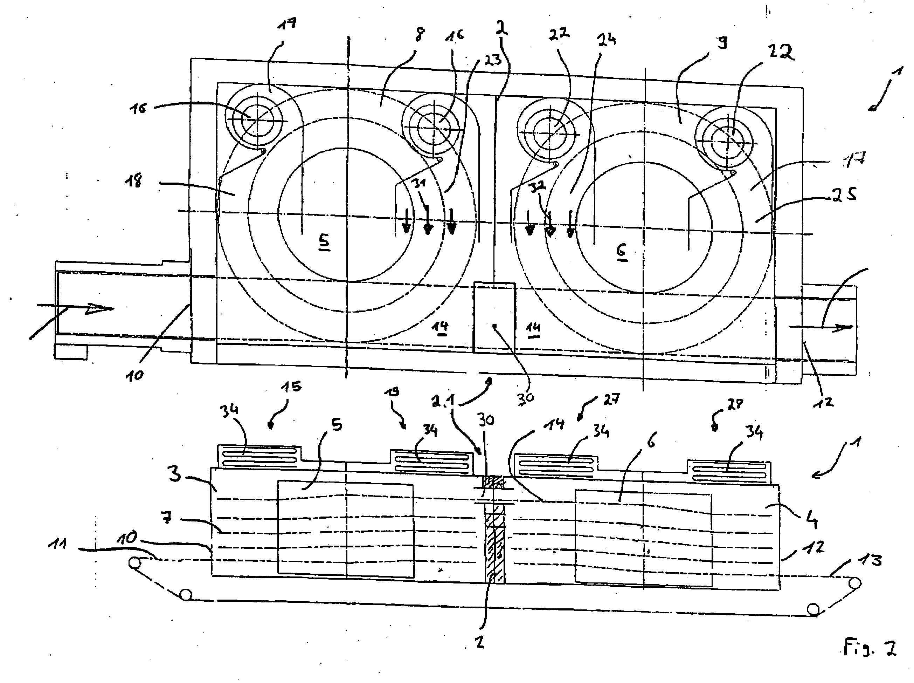

Figure 2 shows the inventive oven, which comprises in the passage 2.1 guiding means 30 in the form of a tube or a tunnel. Into this tube, preferably in the middle, an air flow 26 is injected, which results in a higher pressure in the tube 30. This higher pressure forces the air 26 to flow to the left towards the first chamber 3 and to the right towards the second chamber 4. The magnitude of air flow 26 is preferably controllable such that the leakage is reduced to zero. Preferably also the division of the flow 26 in the tube 30 is controlled.

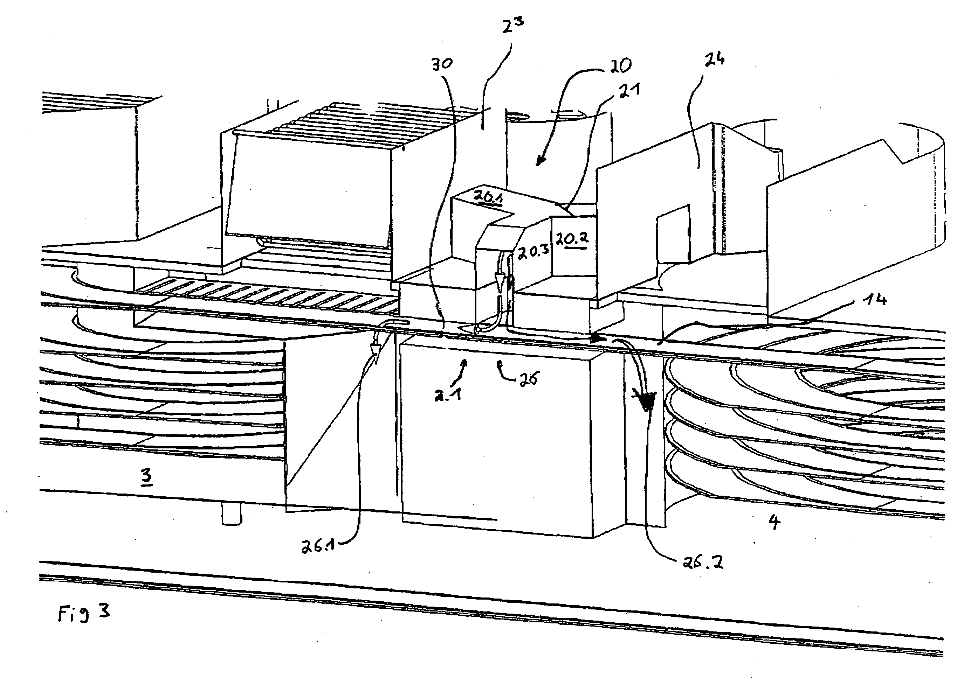

Figure 3 shows further details of the fluid injection into tube 30. Both branches 20.1, 20.2 of a Y-shaped duct 20 are connected to the ducts 23, 24, respectively. The ducts 23, 24 recycle the process fluid 31, 32 back into the chambers 3, 4, respectively. In the duct 20, a valve 21 is arranged, which allows to control from which chamber 3, 4 the process fluid is taken. In the position of the valve as shown in figure 3, all air is taken out of chamber 3. After the air flow 26 has passed the valve 21, it flow into the base 20.3 of the Y-shaped duct 20 and from there it is injected into tube 30, where it is split into the flows 26.1 and 26.2., which flow into chamber 3, 4, respectively. Valve 21 also allows to control the magnitude of flow 26. The setting of valve 21 can be done manually or automatically, for example by a PLC-controller.

This PLC controller adjusts the valve 21, which is driven by a motor, based on desired process conditions and/or measured parameters like temperature and/or humidity in the individual chamber, especially based on the desired leakage in the passage. Additionally, the inventive oven can comprise means, which is preferably located in the tube 30, to adjust the split of air flow 26.

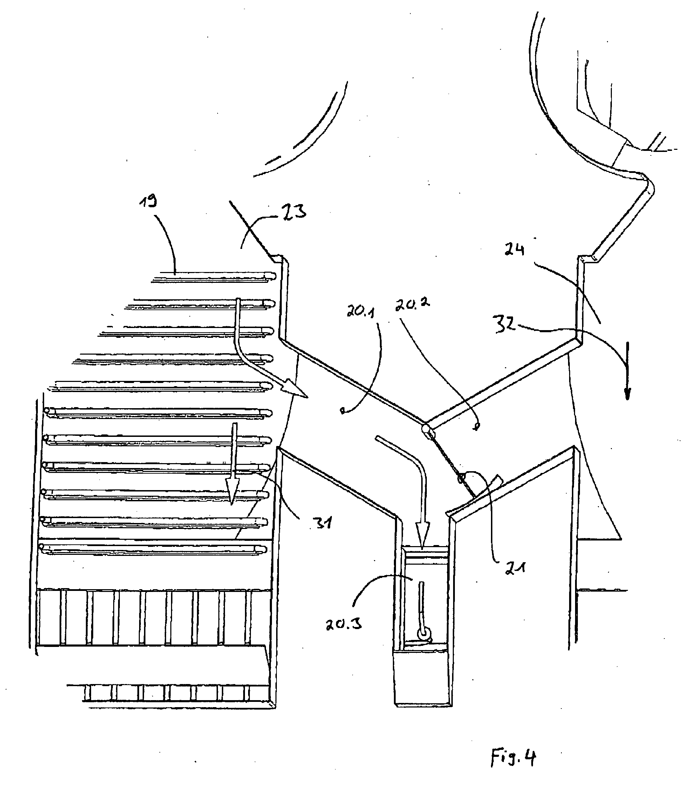

Figure 4 shows valve 21 in detail.

Figure 5 shows an example of controlled leakage between the first chamber 3 and the second chamber 4. The first chamber 3 is operated at a higher temperature and/or humidity than the second chamber 4. In case the temperature and/or humidity in chamber 3 is above the desired set point, a controlled leakage 33 from the second to the first chamber is initiated, as depicted by arrow 33. This leakage is maintained until the process conditions in the first chamber are in the desired range and then stopped again. The place where the leakage 33 takes place can be the passage 2.1 but also any other fluid-connection between the two chambers. The controlled leakage between the two chambers can be initiated and maintained by reducing the pressure in the first chamber 3 and/or increasing the pressure in the second chamber 4. The reduction of the pressure in chamber 3 can be executed by removing air from this chamber for example through the inlet 10. Likewise, air can be forced into chamber 4 to increase its pressure, for example via outlet 12. Alternatively or additionally, air from chamber 4 can be forced, for example by a fan, into chamber 3.

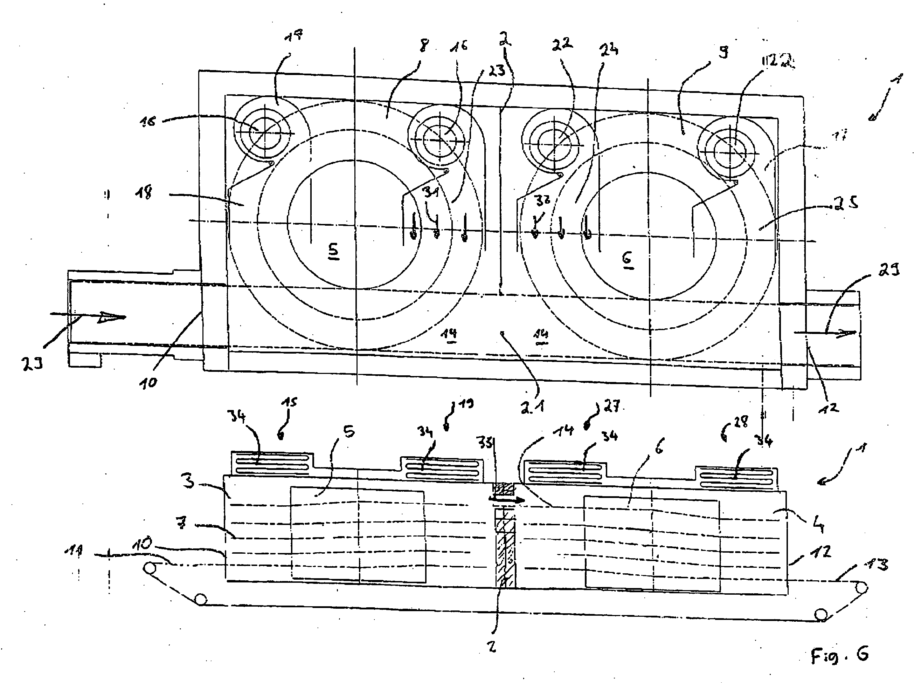

Figure 6 shows another example of controlled leakage between the first chamber 3 and the second chamber 4. The first chamber 3 is operated at a higher temperature and/or humidity than the second chamber 4. In case the temperature and/or humidity in chamber 4 is below the desired set point, a controlled leakage 33 from the first to the second chamber is initiated, as depicted by arrow 33. This leakage is maintained until the process conditions in the second chamber are in the desired range and then stopped. The place where the leakage 33 takes place can be the passage 2.1 but also any other fluid-connection between the two chambers. The controlled leakage between the two chambers can be initiated and maintained by increasing the pressure in the first chamber 3 and/or reducing the pressure in the second chamber 4. The reduction of the pressure in chamber 4 can be executed by removing air from this chamber for example through the outlet 12. Likewise, air can be forced into chamber 3 to increase its pressure, for example via inlet 10. Alternatively or additionally, air from chamber 3 can be forced, for example by a fan, into chamber 4.

It is also possible to have controlled leakage from or to the ambient in order to control the temperature and/or the humidity in one or both of the chambers 3, 4. This leakage can be combined with a controlled leakage between the two chambers 3, 4.

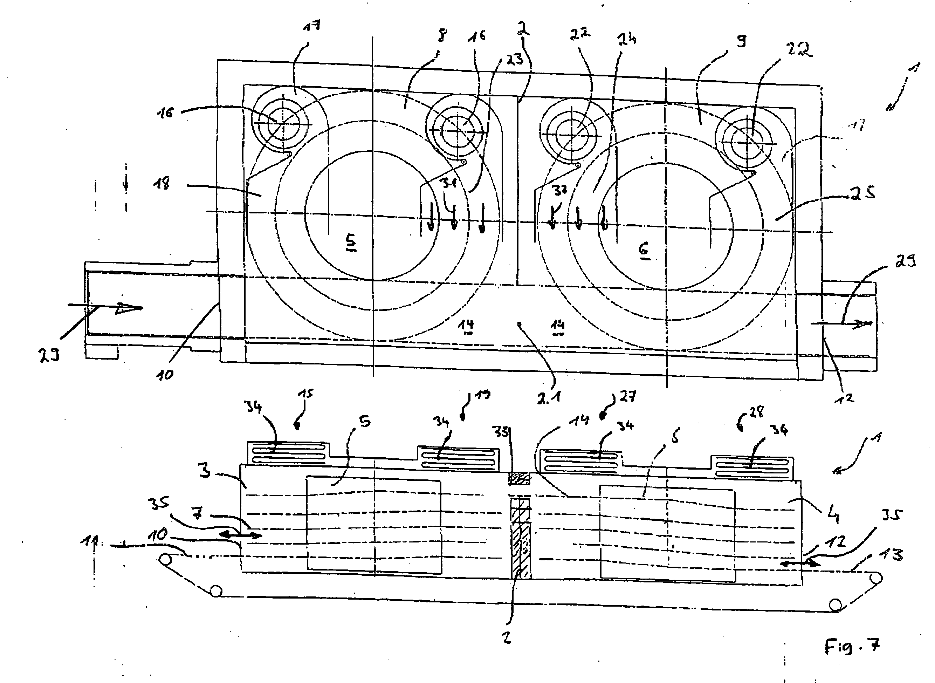

Controlled leakages to the ambient are shown in Figure 7 and depicted by arrows 35. The controlled leakage to the ambient can be utilized to adjust a parameter in one or both of the chambers and/or to achieve a controlled leakage between the two chambers. The person skilled in the art understands that the leakage 35 need not take place at the inlet or the outlet.

In the case that one chamber has an air exchange with the ambient, but no leakage between the chambers is desired, it can be suppressed by a fluid flow 26, as disclosed above.

Figures 8 and 9, which do not illustrate the invention show another ventilation between the two chambers 3, 4 and/or the ambient 36. In the example according to figure 8, the pressure in chamber 4 is lower than the pressure in chamber 3. A fluid flow x is drawn out of chamber 4 and introduced into the guiding means 30 in the passage 2.1, where it is split into a fluid flow z which flows back to chamber 4 and a fluid flow y which flows in the direction of chamber 3. The pressure in the guiding means 30, where the fluid flow x is introduced, is higher than the pressure in chambers 3 and 4, respectively. The direction of the leakage is indicated with arrow 33. Due to this leakage 33, which is equivalent to the fluid flow y, the same fluid flow has to be introduced from the ambient 36 into chamber 4 and has to be blown out of chamber 3 into the ambient, to maintain the mass balance. By means of the process according to figure 8, it is possible to reduce the temperature and/or humidity in chambers 3 and 4, in case the humidity and temperature is higher in chamber 3 than in chamber 4. The person skilled in the art understands that the ratio in which the air flow x is split, can be adjusted by the pressure levels in chambers 3 and 4 relative to each other.

Figure 9 shows the oven according to figure 8. However, in this case the pressure in chamber 3 is lower than the pressure in chamber 4. In this case the fluid flow x is taken out of chamber 3 introduced into the guiding means 30, where the pressure is higher than in chambers 3 and 4, respectively. In the guiding means 30, the fluid flow x is split into a portion y, which flows back to chamber 3, and a portion z which flows to chamber 4. In the present case, the leakage 33 is directed from chamber 3 to chamber 4 and amounts to fluid flow z. Thus, the same amount z has to be taken out of the ambient and introduced into chamber 3 and blown out of chamber 4 into the ambient 36. The process according to figure 9 is utilized to decrease the humidity and/or the temperature in chamber 3 and to increase the temperature and humidity in chamber 4, provided the temperature and humidity are higher in chamber 3 than in chamber 4, respectively.

### Reference signs:

- 1: oven
- 2: separation means, partition
- 2.1: passage from first- to second chamber
- 3: first chamber
- 4: second chamber
- 5: drum
- 6: drum
- 7: conveyor means, conveyor belt
- 8: helical section first chamber
- 9: helical section second chamber
- 10: inlet
- 11: straight conveyor means
- 12: outlet
- 13: straight conveyor means
- 14: connecting conveyor means section
- 15: temperature control means, heating means
- 16: fan
- 17: spiral casing
- 18: air duct
- 19: temperature control means
- 20: Y-shaped air-duct
- 20.1: left branch
- 20.2: right branch
- 20.3: base
- 21: control means, valve
- 22: fan
- 23: air duct
- 24: air duct
- 25: air duct
- 26: air flow
- 26.1: air flow to the first chamber
- 26.2: air flow to the second chamber
- 27: temperature control means
- 28: temperature control means
- 29: transportation direction
- 30: guiding means
- 31: fluid flow in channel 23
- 32: fluid flow in channel 24
- 33: leakage in the passage
- 34: heating elements
- 35: leakage from or to the ambient
- 36: ambient
- x: fluid flow taken out of one chamber
- y: direction of flow, fluid flow to the first chamber 3
- z: direction of flow, fluid flow to the second chamber 4
- ++: higher pressure
- - -: lower pressure

## Claims

1. Oven (1) comprising:
- a first chamber (3) and a second chambers (4), which are separated by separation means (2)
- conveyor means (7) for guiding products from the inlet (10) through these chambers (3, 4) to the outlet (12),
- temperature control means (15-19, 22-26, 27, 28) for controlling the temperature in each chamber individually using a fluid and
- a passage (2.1) in the separation means (2) through which the conveyor means are directed from the first chamber (3) to the second chamber (4),
- means (20.1 - 20.3, 26, 30) to avoid fluid-leakage between the two chambers (3, 4),
**characterized in that** the means (20.1 - 20.3, 26, 30) is a fluid flow (26), introduced in the passage (2.1), whereby the pressure in the vicinity of the passage is higher than the pressure in the first- and second chamber.

2. Oven (1) according to claim 1, **characterized in, that** the fluid flow is divided into a first part (26.1) that flows towards the first chamber (3) and a second part (26.2) that flows towards the second chamber (4).

3. Oven (1) according to one of claims 1 or 2, **characterized in, that** the flows (26.1, 26,2) are guided in the vicinity of the passagee (2.1) by guiding means (30).

4. Oven (1) according to one of claims 1 - 3, **characterized in, that** each chamber (3, 4) comprises a fan (18, 22) and ducts (18, 24) for a fluid flow (31, 32) and that the fluid flow (26) is separated from the fluid flow (31, 32) out of one or more ducts (23, 24).

5. Oven (1) according to claim 4, **characterized in, that** it comprises control means (21) to control the fluid flow (26).

6. Oven (1) according to claim 5, **characterized In, that** the control means are adjusted manually and/or by a PLC-controller.

7. Oven (1) according to one of preceding claims or according to the preamble of claim (1), **characterized in that** it comprises controlled ventilation means between the first chamber (3), the second chamber (4) and/or the ambient.

8. Process to operate an oven (1) according to one of the preceding claims, **characterized in, that** a fluid flow (26) is injected in the passage (2.1) at a higher pressure than the pressure in the first- and second chamber, in order to avoid fluid leakage between the first chamber (3) and the second chamber (4).

## Patentansprüche

1. Ofen (1), umfassend:
eine erste Kammer (3) und eine zweite Kammer (4), die durch Trennmittel (2) voneinander getrennt sind,
Fördermittel (7) zum Leiten von Produkten von dem Einlass (10) durch diese Kammern (3,4) zum Auslass (12),
Temperatursteuermittel (15-19, 22- 26, 27, 28) zum Steuern der Temperatur in jeder Kammer, die jeweils ein Fluid verwenden, und
einen Kanal (2.1) in dem Trennmittel (2), durch den die Fördermittel von der ersten Kammer (3) zu der zweiten Kammer (4) geleitet werden,
Mittel (20.1 - 20.3, 26, 30) zum Vermeiden von Fluidlecks zwischen den zwei Kammern (3,4),
**dadurch gekennzeichnet, dass** das Mittel (20.1 - 20.3, 26, 30) ein Fluidstrom (26) ist, der in den Kanal (2.1) eingeleitet wird, wobei hierdurch der Druck in der Nähe des Kanals höher als der Druck in der ersten und der zweiten Kammer ist.

2. Ofen (1) nach Anspruch 1, **dadurch gekennzeichnet, dass** der Fluidstrom in einen ersten Teil (26.1) aufgeteilt ist, der zu der ersten Kammer (3) strömt, und einen zweiten Teil (26.2), der zu der zweiten Kammer (4) strömt.

3. Ofen (1) nach einem der Ansprüche 1 oder 2, **dadurch gekennzeichnet, dass** die Ströme (26.1, 26.2) in der Nähe des Kanals (2.1) durch ein Leitungsmittel (30) geleitet werden.

4. Ofen (1) nach einem der Ansprüche 1 bis 3, **dadurch gekennzeichnet, dass** jede Kammer (3, 4) ein Gebläse (16, 22) und Kanäle (18, 24) für einen Fluidstrom (32, 32) umfasst und dass der Fluidstrom (26) von dem Fluidstrom (31, 32) aus einem oder mehreren Kanälen (23, 24) abgeschieden wird.

5. Ofen (1) nach Anspruch 4, **dadurch gekennzeichnet, dass** dieser Steuermittel (4) zum Steuern des Fluidstroms (26) umfasst.

6. Ofen (1) nach Anspruch 6, **dadurch gekennzeichnet, dass** die Steuermittel manuell und/oder von einer PLC-Steuerung eingestellt werden.

7. Ofen (1) nach einem der vorherigen Ansprüche oder nach dem Oberbegriff von Anspruch 1, **dadurch gekennzeichnet, dass** dieser ein gesteuertes Entlüftungsmittel zwischen der ersten Kammer (3), der zweiten Kammer (4) und/oder der Umgebung umfasst.

8. Verfahren zum Betreiben eines Ofens (1) nach einem der vorherigen Ansprüche, **dadurch gekennzeichnet, dass** ein Fluidstrom (26) in den Kanal (2.1) bei einem höheren Druck als dem Druck in der ersten und/oder zweiten Kammer eingespritzt wird, um ein Fluidleck zwischen der ersten Kammer (3) und der zweiten Kammer (4) zu vermeiden.

## Revendications

1. Four (1) comprenant :
- une première chambre (3) et une seconde chambre (4), qui sont séparées par des moyens de séparation (2),
- des moyens d'acheminement (7) servant à guider des produits depuis l'entrée (10) à travers ces chambres (3, 4) jusqu'à la sortie (12),
- des moyens de régulation de la température (15 à 19, 22 à 26, 27, 28) servant à réguler la température dans chaque chambre individuellement en utilisant un fluide et
- un passage (2.1) dans les moyens de séparation (2) à travers lequel les moyens d'acheminement sont dirigés depuis la première chambre (3) jusqu'à la seconde chambre (4),
- des moyens (20.1 à 20.3, 26, 30) permettant d'éviter une fuite de fluide entre les deux chambres (3, 4),
**caractérisé en ce que** les moyens (20.1 à 20.3, 26, 30) se présentent sous la forme d'un flux de fluide (26), introduit dans le passage (2.1), la pression à proximité du passage étant ainsi supérieure à la pression dans les première et seconde chambres.

2. Four (1) selon la revendication 1, **caractérisé en ce que** le flux de fluide est divisé en une première partie (26.1) qui s'écoule vers la première chambre (3) et une seconde partie (26.2) qui s'écoule vers la seconde chambre (4).

3. Four (1) selon l'une des revendications 1 ou 2, **caractérisé en ce que** les flux (26.1, 26.2) sont guidés à proximité du passage (2.1) par un moyen de guidage (30).

4. Four (1) selon l'une des revendications 1 à 3, **caractérisé en ce que** chaque chambre (3, 4) comprend un ventilateur (16, 22) et des conduits (18, 24) pour un flux de fluide (31, 32) et **en ce que** le flux de fluide (26) est séparé du flux de fluide (31, 32) en provenance d'un ou plusieurs conduits (23, 24).

5. Four (1) selon la revendication 4, **caractérisé en ce qu'**il comprend des moyens de régulation (21) servant à réguler le flux de fluide (26).

6. Four (1) selon la revendication 5, **caractérisé en ce que** les moyens de régulation sont réglés manuellement et/ou par un automate programmable.

7. Four (1) selon l'une des revendications précédentes ou selon le préambule de la revendication 1, **caractérisé en ce qu'**il comprend des moyens de ventilation commandés entre la première chambre (3), la seconde chambre (4) et/ou le milieu ambiant.

8. Procédé pour faire fonctionner un four (1) selon l'une des revendications précédentes, **caractérisé en ce qu'**un flux de fluide (26) est injecté dans le passage (2.1) à une pression supérieure à la pression régnant dans les première et seconde chambres, de façon à éviter une fuite de fluide entre la première chambre (3) et la seconde chambre (4).
